# EUROPEAN PATENT APPLICATION

(11) **EP 1 933 318 A1**
(43) Date of publication of application: **18.06.2008**
(21) Application number: 07122774.8
(22) Date of filing: 10.12.2007
(51) Int. Cl.: G11B 20/00, H04L 29/06

(54) **System for using a virtual tape encryption format**

(30) Priority: 11.12.2006 US 608972
(71) Applicant: HIFN, Inc., Los Gatos, CA 95032-7695 (US)
(72) Inventor: Matze, John E. G., Poway CA 92064 (US)
(74) Representative: Gates, Marie Christina Esther

(57) **Abstract**

A system and method for storing electronic data in accordance with the present invention, requires receipt of the data to be stored from a back-up server. The data is then compressed, encrypted and formatted by the system to create a virtual file. An encryption key and "meta-data", which includes information about the physical attributes of electronic data in the virtual file, are also created by the system. The virtual file, with meta-data, can then be held at a storage device without specifically formatting the virtual file for the device. The encryption key is held separately for subsequent use in file reconstruction.

## Description

### FIELD OF THE INVENTION

The present invention pertains generally to systems and methods for storing electronic data. More specifically, the present invention pertains to systems and methods for storing electronic data that has been compressed and encrypted. The present invention is particularly, but not exclusively, useful as a system or method for storing compressed/encrypted electronic data on a storage device, regardless of the format required by the storage device.

### BACKGROUND OF THE INVENTION

Various devices are presently available for use in storing electronic data. For instance, it is well known that electronic libraries, disks, tapes and DVDs can be selectively used for this purpose. It happens, however, that each type storage device requires its data be formatted in accordance with a protocol that is specific for the particular storage device. Stated differently, the format protocols for different type storage devices are not electronically interchangeable. Consequently, the long-term storage of electronic data on a storage device requires the data be formatted for the particular type storage device that is being used. Additionally, for security reasons, it is preferable that the data be compressed and encrypted for storage.

Heretofore, the formatting, compression and encryption functions associated with data storage have had to be performed at a back-up server. Typically, these functions have needed to be completed at the user's site, before the data leaves the site for storage. This has required additional computer time and additional computer power that is not always reliably available. In other words, accomplishing such an operation can easily be both inconvenient and inefficient. Moreover, in addition to the completion of these functions, and depending on the particular type of storage device that is to be used, it has also been necessary to select the proper format in which the data is to be stored.

In light of the above, it is an object of the present invention to provide a system and method that relieves a back-up server of the responsibilities for formatting, compressing and encrypting electronic data before it can be stored. Another object of the present invention is to provide a system and method for storing compressed and encrypted data with no requirement for specifically formatting the data before storage. Still another object of the present invention is to provide a system and method for storing electronic data that is simple to implement, is easy to use and is comparatively cost effective.

### SUMMARY OF THE INVENTION

In accordance with the present invention, a system for storing electronic data is provided that reduces the operational requirements of a back-up server. Specifically, this is done by relieving the back-up server of otherwise specified formatting and compress/encrypt functions. In addition to reducing the workload of the back-up server, the system of the present invention also provides for the creation of a two-part key that allows compressed/encrypted data to be stored in a selected storage device (e.g. library, disk, tape, DVD). Importantly, data can be stored on any storage device, regardless of its original format.

As a first part of the two-part key, the system creates what is referred to herein as "meta-data". This meta-data essentially chronicles the physical attributes of the data's original format. As a second part of the two-part key, the system creates an "encryption key." Preferably, this encryption key is of a type commonly known as a "256 bit" key, and it is specifically established for the particular storage device where the data is to be stored. Functionally, the encryption key enables the meta-data to be used for reformatting the compressed/encrypted data that has been stored and is subsequently recovered.

During data storage, the individual parts of the two-part key can be physically separated from each other. For example, the meta-data can be stored at the storage device, along with the compressed/encrypted data. On the other hand, the meta-data can be kept with the encryption key. The encryption key, however, must be kept elsewhere, separate from the storage device (e.g. at a key manager site). In any event, when the data is received from storage, both parts of the two-part key are required in order to return the compressed/encrypted data to its original format.

In operation, when an electronic data file is to be stored, it is sent from a back-up server to the system in its original format. Importantly, the back-up server merely transfers the file data to the system. The system then compresses/encrypts the file data in a manner that is well known in the art, such as by the use of a commercially available chip manufactured by HIFN. Along with the compress/encrypt function, the system also creates the two-part key disclosed above. More specifically, as the data is compressed/encrypted, a buffer is created. This buffer, which may be of variable length, is then broken down into individual "32K bit" pieces. Information as to how these pieces interact with each other, and how they are structured in the data's original format constitutes the meta-data mentioned above.

Once it is created, the entire two-part key, or only the encryption key portion of the two-part key, can then be placed at the key manager site for subsequent use. The remainder of the file (i.e. the compressed/encrypted data, with or without the meta-data, but certainly without the encryption key) is now a "virtual tape." As envisioned for the present invention, this virtual tape can be stored in a selected storage device. As indicated above, this storage device need not be format specific.

When a data file (i.e. virtual tape) is to be recovered from a storage device and restored, the data file is first removed from the device. The encryption key is then used to open the data file. This also allows the meta-data to be used for reformatting the data file for subsequent use.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Fig. 1 is a schematic diagram showing a system in accordance with the present invention, with the system inserted into a network for the flow of electronic data to a selected storage device; and
Fig. 2 is a graphic representation of the creation of "meta-data" for a buffer of electronic data in accordance with the present invention.

### DESCRIPTION OF THE PREFERRED EMBODIMENTS

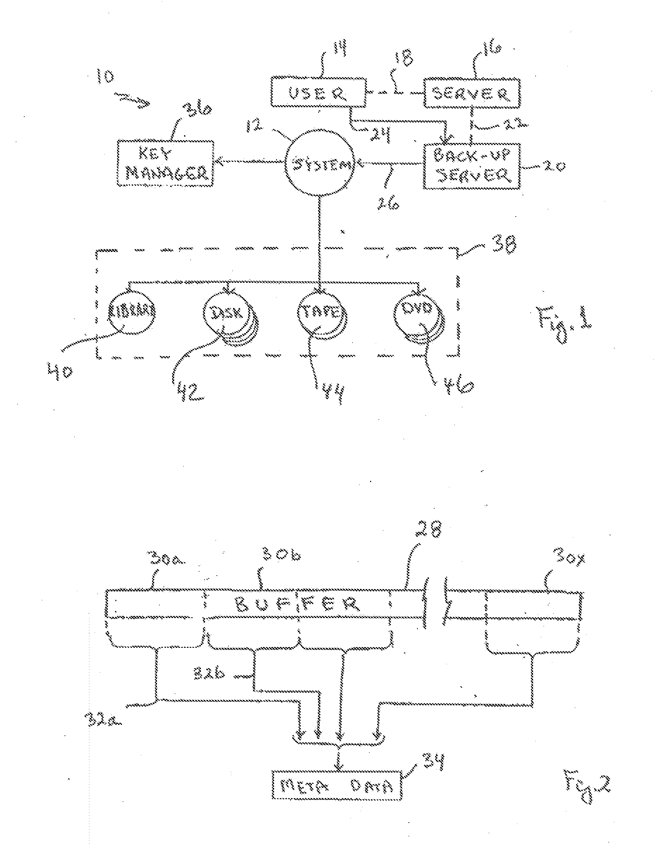

Referring initially to Fig. 1, an electronic data network for the present invention is shown, and is generally designated 10. As shown, the network 10 includes a system 12 that communicates with a user (central processor) 14. On site with the user 14, is a server 16 that communicates with the user 14 via a connection 18. Also located at the site of user 14 is a back-up server 20 that communicates with the server 16 via a connection 22. As indicated by arrows 24 and 26 in Fig. 1, the system 12 also communicates with the user 14, and with the back-up server 20. Specifically, as intended for the present invention, a communication between the system 12 and user 14 is required in order to store electronic data on the back-up server 20 that would otherwise diminish the operational capacity of server 16.

Operationally, in order to initiate a routine for the storage of electronic data, the user 14 sends a start command to the back-up server 20. This command is represented in Fig. 1 by the arrow 24. Upon receipt of the start command, the system 12 will receive the data from the back-up server 20 that is to be stored. This function is represented in Fig. 1 by the arrow 26 and can be accomplished as preprogrammed by the user 12. Importantly, the electronic data is received from the back-up server 20 without regard to its format protocol. Thus, this data can be received at the system 12 in clear text, before it has been compressed and encrypted. Specifically, rather than using the back-up server 20, the functions of compressing and encrypting the data to be stored are accomplished at the system 12.

Preferably, the compression/encryption functions are accomplished at the system 12 in a manner well known in the pertinent art, such as by using a HIFN chip. The result of this is what is elsewhere herein referred to as a "virtual file". As the "virtual file" is created, the system 12 also creates a so-called two-part key. As intended for the present invention, this two-part key includes "meta-data" (i.e. the first part) and an encryption key (i.e. the second part).

For purposes of the present invention, the meta-data that is created by the system 12 essentially chronicles the physical attributes of the electronic data's original format. Referring to Fig. 2, it will be appreciated that the electronic data received from back-up server 20 for storage is held in a buffer 28. The buffer 28 is typical of temporary storage and, as shown, can be of variable length. Also typical, the buffer 28 is broken down into individual 32K bit pieces 30 (the pieces 30a, 30b and 30x are only exemplary). As shown in Fig. 2, and implied above, each piece 30 of the buffer 28 has certain physical attributes that are unique and characteristic of the particular piece 30 (e.g. piece 30a). These physical attributes of each piece 30 (e.g. size, location in buffer 28 and function) are then determined and chronicled by the system 12. As indicated by arrows 32a and 32b in Fig. 2, separate information is collected for each respective piece 30 in the buffer 28 (e.g. pieces 30a and 30b). This information is then collected and combined into a functional indicator, hereinafter referred to as meta-data 34.

Along with the creation of meta-data 34, the system 12 also generates an encryption key (not shown) that will be subsequently used to decrypt the buffer 28. Preferably, this encryption key will be of a type known in the pertinent art as a "256 bit" key. At this point, it is to be appreciated that the system 12 has created, or generated, a "virtual file" (i.e. buffer 28), an encryption key, and meta-data 34.

For security reasons, the encryption key is held at a key manager site 36. The meta-data 34 can also be held at the key manager site 36. Alternatively, however, the meta-data 34 can be stored with the compressed/encrypted buffer 28 at a storage device 38. Importantly, the storage device 38 and the key manager site 36 must be physically, and electronically, separated from one another. Further, the encryption key must be specific for each storage device 38. Referring back to Fig. 1, it will be seen that the storage device 38 may be any of several different type devices. For example, the storage device 38 can be either an electronic library 40, a disk 42, a tape 44 or a DVD 46 of a type well known in the pertinent.

In operation, the user 14 sends a start command to the system 12. In response, the system 12 receives electronic data to be stored from the back-up server 20. The system 12 then compresses and encrypts the data into a buffer 28 (i.e. a "virtual file"). Along with the compress/encrypt functions, the system 12 also creates the encryption key, and generates the meta-data 34. The now compressed and encrypted data in buffer 28 ("virtual file") is then sent to a storage device 38 for storage. While the virtual file is in storage, the encryption key is held at the key manager site 36. Alternatively, the meta-data 34 can be held at the key manager site 36 with the encryption key, or placed into storage device 38 with the virtual file. Importantly, in this process, the back-up server 20 performs no function, other than transferring the data to be stored to the system 12.

When the data is subsequently removed from storage device 38 for reconstruction, the virtual file (buffer 28) is returned to the system 12. Both the encryption key and the meta-data 34 are also returned to the system 12. Next, the encryption key is used to decrypt the buffer 28. The meta-data can then be used to reconstruct the buffer 28 into its original protocol format.

While the particular System for Using a Virtual Tape Encryption Format as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A method for storing an electronic data file which comprises the steps of:
receiving the data file from a back-up server, wherein the data file has a format;
compressing the data file;
encrypting the data file;
creating meta-data, wherein the meta-data includes information regarding physical attributes of the data file format; and
moving the compressed and encrypted data file to a storage device for storage.

2. A method as recited in claim 1 further comprising the step of prescribing an encryption key for use in decrypting the encrypted data file.

3. A method as recited in claim 2 wherein the encryption key is a 256 bit key.

4. A method as recited in claim 1 further comprising the step of placing the encryption key at a key manager site, separate from the storage device.

5. A method as recited in claim 4 wherein the meta-data is placed with the encryption key at the key manager site.

6. A method as recited in claim 1 wherein the data file format is a first format protocol and the storage device has a second format protocol.

7. A method as recited in claim 6 wherein the first format protocol is different from the second format protocol.

8. A method as recited in claim 6 wherein the second format protocol is selected from a group consisting of an electronic library, a disk, a tape and a DVD.

9. A method for storing an electronic data file, wherein the data file has a format, and wherein the method comprises the steps of:
receiving the data file from a back-up server;
preparing a virtual file, wherein the virtual file includes the contents of the electronic data file;
creating meta-data, wherein the meta-data includes information regarding physical attributes of the data file format; and
moving the compressed and encrypted data file to a storage device for storage.

10. A method as recited in claim 9 wherein the preparing step comprises the steps of:
compressing the data file; and
encrypting the data file.

11. A method as recited in claim 10 further comprising the step of prescribing an encryption key for use in decrypting the encrypted data file.

12. A method as recited in claim 10 wherein the encryption key is a 256 bit key.

13. A method as recited in claim 10 further comprising the step of placing the encryption key at a key manager site.

14. A method as recited in claim 13 wherein the meta-data is placed with the encryption key at the key manager site, separate from the storage device.

15. A method as recited in claim 10 wherein the data file format is a first format protocol and the storage device has a second format protocol.

16. A method as recited in claim 15 wherein the first format protocol is different from the second format protocol, and wherein the second format protocol is selected from a group consisting of an electronic library, a disk, a tape and a DVD.

17. A device for storing an electronic data file which comprises:
a means for receiving the data file from a back-up server;
a means for preparing a virtual file, wherein the virtual file includes the contents of the electronic data file;
a means for creating meta-data, wherein the meta-data includes information regarding physical attributes of the data file format; and
a means for moving the virtual file to a storage device for storage.

18. A device as recited in claim 17 further comprising:
a means for compressing the data file; and
a means for encrypting the data file.

19. A device as recited in claim 18 further comprising:
a means for prescribing an encryption key for use in decrypting the encrypted data file; and
a key manager site for holding the encryption key.

20. A device as recited in claim 19 wherein the data file format is a first format protocol and the storage device has a second format protocol, and wherein the second format protocol is selected from a group consisting of an electronic library, a disk, a tape and a DVD.
